# EUROPÄISCHE PATENTSCHRIFT

(11) **EP 3 986 821 B1**
(45) Veröffentlichungstag und Bekanntmachung des Hinweises auf die Patenterteilung: **25.02.2026**
(21) Anmeldenummer: 19732615.0
(22) Anmeldetag: 19.06.2019
(51) Int. Cl.: B65H 69/06, F16B 5/06, F16B 21/02

(54) **DÜSENSYSTEM FÜR EINE TEXTILMASCHINE, SCHRAUBSYSTEM FÜR EIN SCHNELLBEFESTIGUNGSSYSTEM UND TEXTILMASCHINE MIT DÜSENSYSTEM**
NOZZLE SYSTEM FOR A TEXTILE MACHINE, SCREW SYSTEM FOR A QUICK FASTENING SYSTEM, AND TEXTILE MACHINE COMPRISING SAID NOZZLE SYSTEM
SYSTÈME DE BUSES POUR MACHINE TEXTILE, SYSTÈME DE VIS POUR SYSTÈME DE FIXATION RAPIDE ET MACHINE TEXTILE ÉQUIPÉE DU SYSTÈME DE BUSES

(43) Veröffentlichungstag der Anmeldung: 27.04.2022
(73) Patentinhaber: Heberlein Technology AG, 9630 Wattwil (CH)
(72) Erfinder: BUCHMÜLLER, Patrick, 9643 Krummenau (CH); FORRER, Peter, 9630 Wattwil (CH); LEGENSTEIN, Fabian, 8050 Zürich (CH); BRUNNER, Andreas, 9514 Wuppenau (CH)
(74) Vertreter: Hepp Wenger Ryffel AG
(86) Internationale Anmeldenummer: PCT/EP2019/066250
(87) Internationale Veröffentlichungsnummer: WO 2020/253958

(56) Entgegenhaltungen:
- EP-A1- 0 385 125
- EP-A2- 1 262 619
- US-A- 2 549 793
- US-A1- 2011 027 038
- US-A1- 2018 051 735

## Beschreibung

Die Erfindung betrifft ein Düsensystem für eine Textilmaschine, ein Schraubsystem für ein Schnellbefestigungssystem und eine Textilmaschine mit Düsensystem.

Aus dem Stand der Technik sind verschiedene Düsensysteme bekannt. Düsensysteme werden üblicherweise verwendet zum Umlenken, beschleunigen oder präzisen Aufbringen von Fluiden. Mit Fluiden sind vorliegend sowohl Gase als auch Flüssigkeiten gemeint. Düsenvorrichtungen werden unter Anderem in Textilmaschinen verwendet. Textilmaschinen umfassen meist mehrere Düsensysteme zur Behandlung von Garnen. Für die Wartung oder Ersetzung der Düsen müssen sie abmontiert werden. Dazu müssen die Schrauben gelöst werden, mit denen die Düsen üblicherweise befestigt sind.

Aus EP 2 420 466 und EP 0 385 125 sind solche Düsensysteme offenbart, bei welchem die Düse mit mehreren Schraubenbolzen befestigt ist.

Aus WO 2020/253958 ist ein Schraubsystem für ein Schnellbefestigungssystem offenbart.

Die bekannten Düsensysteme haben den Nachteil, dass die Montage und Demontage viele Arbeitsschritte und somit viel Zeit benötigen. Weiter besteht die Gefahr, dass die Düsensysteme oder die Befestigungsmittel der Düsensysteme herunterfallen und so beschädigt werden können.

Es ist Aufgabe der Erfindung, diese und weitere Nachteile des Standes der Technik zu beheben. Insbesondere soll ein Düsensystem bereitgestellt werden, welches schnell, einfach und sicher befestigt werden kann.

Diese Aufgaben werden gelöst durch ein Düsensystem für eine Textilmaschine und ein Schraubsystem für ein Schnellbefestigungssystem mit einem Düsensystem entsprechend der unabhängigen Ansprüche 1 und 11.

Insbesondere wird die Aufgabe durch ein Düsensystem für eine Textilmaschine gelöst. Das Düsensystem umfasst mindestens ein Düsenelement und ein Anschlusselement zur Verbindung des Düsenelements mit einer Textilmaschine. Das Anschlusselement umfasst mindestens ein Schnellbefestigungssystem. Das Schnellbefestigungssystem umfasst eine erste und eine zweite Position. In der ersten Position ist das Schnellbefestigungssystem mit dem Anschlusselement verbunden, so dass das Düsenelement so am Schnellbefestigungssystem befestigbar ist, dass das Düsenelement ohne Hilfsmittel entfernbar ist. Das Schnellbefestigungssystem ist so ausgelegt, dass in der zweiten Position das Düsenelement unbeweglich am Anschlusselement befestigt ist.

Das ermöglicht eine sichere Befestigung und dennoch ein einfaches, rasches Entfernen. Ohne Hilfsmittel entfernbar ist hier so definiert, dass das Düsenelement bewegt und vom Anschlusselement entfernt werden kann, ohne das Schnellbefestigungssystem oder Teile des Schnellbefestigungssystem bewegen zu müssen, wie beispielsweise eine Schraube zu lösen oder durch Verwendung einer Zange, Hammer, Schraubenzieher oder anderer Werkzeuge. Das Schnellbefestigungssystem kann fest mit dem Anschlusselement verbunden sein, so dass bei Entfernung des Düsenelements diese Verbindung nicht lösbar und/oder das Schraubssystem vom Anschlusselement entfernbar ist. Das Schnellbefestigungssystem kann in einer oder mehreren Öffnungen befestigt, bevorzugt festgeklemmt sein. So kann sichergestellt werden, dass das Schraubsystem nicht herunterfällt, wenn das Düsenelement gelöst wird. In der ersten Position kann das Düsenelement durch einen Magneten und/oder ein Federelement haltbar sein. Das Düsenelement kann in der ersten Position an zwei Punkten gehalten sein und/oder in der zweiten Position an einem oder zwei Orten geklemmt sein.

Unter Textilmaschinen werden allgemein Maschinen zur industriellen Herstellung von Textilien verstanden, beispielsweise Spinnmaschinen, Texturiermaschinen, Fachmaschinen und Streckmaschinen.

Diese Maschinen sind alle mit Düsen ausgestattet. Textilmaschinen dienen dem Behandeln von allen Arten von Fäden, Garnen, Kabeln oder ähnlichen Materialien. Diese können aus künstlichen Fasern (Kunststoffe wie PE, PP usw.) bestehen. Sie können aber auch aus Naturfasern (Baumwolle, Wolle, Bast usw.) oder Mischfasern bestehen. Vorliegend wird der Begriff "Garn" für alle diese Arten von Materialien verwendet.

Das Anschlusselement kann Befestigungselemente zur Befestigung des Düsensystems an einer Textilmaschine umfassen. Das Anschlusselement kann eine Grundelement, insbesondere eine Grundplatte, umfassen. Das Anschlusselement kann Garnführungselemente und/oder Garnklemmelemente umfassen. Die Garnführungselemente und/oder Garnklemmelemente können im Wesentlichen senkrecht zu einer Oberfläche des Grundelements angeordnet sein. Die Garnführungselemente und/oder Garnklemmelemente können an jeweils einem Ende des Grundelements angeordnet sein. Das Grundelement und die Garnführungselemente können einstückig gefertigt sein, also insbesondere als ein Stück aus einem Material gefräst oder gegossen sein. Bevorzugt ist das Düsenelement zwischen den Garnführungselemente und/oder Garnklemmelementen angeordnet. Das Schnellbefestigungssystem kann an einer Fläche und/oder an einer Seite des Grundelements angeordnet sein. Es ist aber auch möglich, dass das Schnellbefestigungssystem am Garnführungselement und/oder Garnklemmelement befestigt oder ein Teil dessen ist. Das Anschlusselement kann eine Befestigungsmöglichkeit, insbesondere ein Gewinde, zur Befestigung einer Luftzuführung umfassen. Das Anschlusselement kann aus einer Legierung aus Aluminium, Magnesium und Silizium bestehen. Das Anschlusselement kann Befestigungsöffnungen zum Befestigen des Schnellbefestigungssystems umfassen. Die Befestigungsöffnungen können Gewinde umfassen. Die Befestigungsöffnungen können am Umfang geöffnet oder geschlossen sein. Sind die Befestigungsöffnungen am Umfang geschlossen, so entstehen durch das Schneiden des Gewindes keine Graten am Rand der Befestigungsöffnung.

Das Schnellbefestigungssystem kann ein starres Element, insbesondere ein Klemmelement, und/oder eine betätigbare Vorrichtung umfassen. Die betätigbare Vorrichtung kann ein bewegliches Element, insbesondere ein drehbares Element, umfassen. Das bewegliche Element kann insbesondere um maximal 180° drehbar sein. Das bewegliche Element kann verschiebbar sein. Die betätigbare Vorrichtung kann ein bewegliches und ein unbewegliches Element umfassen. Das bewegliche Element kann verschiebbar und/oder drehbar im unbeweglichen Element angeordnet sein. Das bewegliche Element kann so ausgebildet sein, dass durch das Bewegen des Elements das Düsenelement verschiebbar, respektive sowohl zwischen Anschlusselement und Schnellbefestigungssystem als auch zwischen dem beweglichen und dem starren Element des Schnellbefestigungssystems eine Klemmwirkung erzielbar ist. Das Schnellbefestigungssystem kann zwei betätigbare Vorrichtungen umfassen. Der Vorteil der Kombination aus starrem Element und betätigbarer Vorrichtung liegt darin, dass nur eine Verbindung gelöst werden muss, wodurch das Austauschen des Düsensystems einfacher und schneller wird.

Vorzugsweise ist das Schnellbefestigungssystem so ausgelegt, dass in einer Befestigungsposition des Anschlusselements ein Herunterfallen des Düsenelements verhinderbar ist.

In einer Befestigungsposition ist das Anschlusselement an einer Textilmaschine angeordnet und das Düsenelement ist seitlich des Grundelements angeordnet. In dieser Befestigungsposition ist das Schnellbefestigungssystem oder zumindest ein Teil davon insbesondere unterhalb des Düsenelements angeordnet, bevorzugt so, dass das Düsenelement auf einem Element des Schraubsystems aufliegt, bevorzugt auf dem starren Element. In dieser Position kann die bewegliche Vorrichtung oberhalb des Düsenelements angeordnet sein. Dadurch kann einfach verhindert werden, dass beim Lösen der beweglichen Vorrichtung das Düsenelement herunterfällt.

Vorzugsweise ist in der ersten Position des Schnellbefestigungssystems das Düsenelement zwischen einer ersten und einer zweiten Lage beweglich angeordnet.

In der ersten Position kann das Düsenelement verschiebbar angeordnet sein, insbesondere zwischen zwei Elementen des Schnellbefestigungssystems, also von einem ersten Element weg zu einem zweiten hin. Es ist aber auch möglich, dass das Düsenelement in der ersten Position seitlich verschiebbar angeordnet ist und/oder kippbar und/oder schwenkbar.

Vorzugsweise umfasst das mindestens eine Düsenelement ein Adapterelement. Mindestens eine Düse ist am Adapterelement angeordnet.

Das Adapterelement kann Befestigungselemente und/oder Befestigungsabschnitte und/oder Befestigungseinschnitte umfassen, insbesondere einen im Wesentlichen länglichen Einschnitt und einen kürzeren und zumindest an einem offenen Ende breiteren Einschnitt. Der längliche Einschnitt kann im Wesentlichen ein Langloch mit einem offenen Ende sein. Der längliche Einschnitt kann 7mm tief sein. Der längliche Einschnitt kann eine Breite von 4mm mit einer Toleranz von 0 bis +0.075mm haben. Das geschlossene Ende des länglichen Einschnitts kann eine Rundung von 2mm aufweisen. Die Kanten des länglichen Einschnittes können abgerundet sein, bevorzugt mit einem Radius von 3mm. Der längliche Einschnitt ist bevorzugt so ausgebildet, dass das Düsenelement in der ersten Position des Schnellbefestigungssystems entlang der Garnführrichtung verschiebbar ist.

Vorzugsweise ist durch das Schnellbefestigungssystem die mindestens eine Düse direkt oder über ein Zwischenadapterelement am Adapterelement und/oder das Adapterelement am Anschlusselement befestigt oder befestigbar.

Das Schnellbefestigungssystem ist im ersten Fall so mit dem Adapterelement verbunden oder verbindbar wie vorhergehend die Verbindung zwischen Schnellbefestigungssystem und Anschlusselement beschrieben wurde.

Erfindungsgemäss wird die Aufgabe weiter durch ein Düsensystem gelöst, insbesondere wie vorhergehend beschrieben. Das Anschlusselement umfasst eine Dichtung zur Abdichtung einer Luftzufuhr.

Die Dichtung kann fest oder lösbar mit dem Grundelement verbunden oder verbindbar sein.

Vorzugsweise umfasst die Dichtung eine im Wesentlichen konische Form. Die Innenfläche umfasst insbesondere einen zur Achse der Dichtung hin konstanten Radius.

Diese konische Form ist bevorzugt so angeordnet, dass die weite Seite der Konusform innerhalb des Anschlusselements angeordnet ist. So kann einfach verhindert werden, dass die Dichtung aus dem Anschlusselement fällt. Die Dichtung ist bevorzugt aus Kunststoff, insbesondere aus Fluorkarbonkautschuk. Die Dichtung kann einen ovalen Querschnitt aufweisen und/oder im Adapterelement oder im Zwischenadapterelement angeordnet sein, sind beispielsweise mehrere Düsen an einem Zwischenadapterelement oder einem Adapterelement angeordnet.

Vorzugsweise umfasst das Anschlusselement mindestens eine Aussparung zur Aufnahme eines Hülsenelements des Schnellbefestigungssystems.

Das Hülsenelement kann als unbewegliches Element der betätigbaren Vorrichtung ausgebildet sein. Die Ausbuchtung kann dazu ausgelegt sein, einen Befestigungsstift einzubringen. Das Hülsenelement kann also mit einem Befestigungsstift befestigt und/oder befestigbar sein.

Die Aussparung kann eine im Wesentlichen runde Form mit einer abgeflachten Seite umfassen. Die Aussparung kann eine runde Ausbuchtung umfassen, insbesondere neben dem Übergang von der runden Form zur abgeflachten Seite.

Das Anschlusselement kann weitere im Wesentlichen identische Aussparungen umfassen, beispielsweise zur Aufnahme des starren Elements.

Vorzugsweise umfasst das Düsenelement mindestens ein Schutzelement zum Schutz der Düse.

Das Schutzelement kann Teil des Adapterelements sein. Das Schutzelement kann aus Metall oder einem harten Kunststoff sein. Das Schutzelement kann gegossen, gestanzt oder gefräst sein.

Vorzugsweise umfasst das Schutzelement einen Prallkäfig.

Dieser ist insbesondere so angeordnet, dass die Seiten der Düse geschützt sind, die nicht durch andere Elemente des Düsensystems wie beispielsweise die Garnführungselemente oder die Garnklemmelemente, bereits geschützt sind. Bevorzugt umfasst der Prallkäfig zumindest zwei Seitenschutzelemente.

Erfindungsgemäss wird die Aufgabe weiter durch ein Schraubsystem für ein Schnellbefestigungssystem eines Düsensystems gelöst, insbesondere eines Düsensystems wie vorhergehend beschrieben. Das Schraubsystem umfasst ein Hülsenelement zum Befestigen an einem ersten Element und einen Stift zum Verbinden mit einem zweiten Element. Der Stift umfasst mindestens ein am Umfang angeordnetes Führungselement. Das Hülsenelement umfasst eine Führung zur Führung des Führungselements. Der Stift ist zumindest teilweise innerhalb des Hülsenelements angeordnet, so dass der Stift relativ zum Hülsenelement dreh- und verschiebbar gelagert ist. Die Führung umfasst maximal ¾ Windung, insbesondere maximal ½ einer Windung.

Durch ein solches Schraubsystem lässt sich durch eine kleine Drehung die Verbindung zwischen einem ersten und einem zweiten Element lösen. Das Hülsenelement kann also beispielsweise im Anschlusselement angeordnet sein und der Stift kann dazu ausgelegt sein, das Düsenelement zu befestigen. Das Schraubsystem kann also als betätigbare Vorrichtung des Schnellbefestigungssystems wirken. Bevorzugt ist das Schnellbefestigungssystem dazu ausgebildet, mit dem ersten Element fest verbunden zu werden und mit dem zweiten Element lösbar verbunden und/oder verbindbar zu sein. Das Führungselement und die Führung sind bevorzugt so ausgebildet, dass die Auflage zwischen Führungselement und Führung linienförmig ist.

Vorzugsweise ist das Hülsenelement maximal 8.5 mm lang und umfasst einen maximalen Durchmesser von 6 mm.

Die engen Platzverhältnisse eines Düsensystems fordern eine möglichst kleine Befestigungsvorrichtung. Damit das Düsenelement jedoch auch unter Druck genügend Halt gibt, muss das Schnellbefestigungssystem dennoch eine gewisse Grösse haben.

Vorzugsweise umfasst die Führung einen Durchmesser von 1.72 mm, insbesondere mit einer Toleranz von +/- 0.1mm.

Die Einhaltung einer bestimmten Dimension der Führung ist notwendig, um ein einfaches und sicheres Lösen zu ermöglichen. Das Führungselement ist dementsprechend kleiner, bevorzugt maximal 1.5 mm, im Querschnittsdurchmesser.

Vorzugsweise umfasst das Hülsenelement ein Verdrehsicherungselement.

Das Hülsenelement kann Ausbuchtungen, Vorsprünge, Einschnitte und/oder andere unregelmässige Umrisse als Verdrehsicherungselemente aufweisen.

Vorzugsweise umfasst das Verdrehsicherungselement einen Verankerungsabschnitt. Der Verankerungsabschnitt umfasst eine Querschnittsfläche mit einem Umriss. Der Umriss umfasst insbesondere im Wesentlichen eine runde und eine abgeflachte Seite. Der Umriss der Querschnittsfläche umfasst eine Einbuchtung. Die Einbuchtung ist insbesondere an einem Übergang von der abgeflachten Seite zur runden Seite angeordnet. Der Radius der Einbuchtung umfasst insbesondere die Hälfte des Radius der runden Seite, bevorzugt einen Radius von 1.4 mm.

Vorzugsweise umfasst abgerundete Seite einen Radius von 3mm. Der Radius umfasst insbesondere eine Toleranz von 0.05mm.

Eine passgenaue Fertigung ermöglicht eine sichere Befestigung des Schraubsystems.

Vorzugsweise umfasst die abgeflachte Seite des Umrisses zum Mittelpunkt der runden Seite eine Distanz, die etwa 2.5mm umfasst.

Vorzugsweise ist die Führung so ausgebildet, dass ein Hub des Stifts von mindestens 1. 55 mm möglich ist.

Der Stift muss genügend angehoben werden können, damit eine einfache Entfernung des zweiten Elements ohne Hilfsmittel möglich ist.

Die Führung kann zumindest teilweise eine Steigung zwischen 15°-45°, bevorzugt 18 oder 30°, umfassen.

Dadurch wird sichergestellt, dass der Stift bei einer kleinen Bewegung eine genügend grosse Distanz überwindet, damit das zweite Element, bspw. das Düsenelement, einfach entfernt werden kann, wobei trotzdem eine genügende Sicherung gegen Herunterfallen gegeben ist.

Vorzugsweise ist die Führung geschlossen.

Die Führung weist also keine Öffnung am Umfang auf, durch die ein geführtes Element in die Führung eingebracht werden könnte.

Vorzugsweise umfasst die Führung mehrere Abschnitte, wobei die Abschnitte mit oder ohne Steigung ausgebildet sind.

Die Steigung eines ersten Abschnitts kann sich von der Steigung eines zweiten Abschnitts unterscheiden. Die Abschnitte ohne und die Abschnitte mit Steigung können abwechselnd angeordnet sein.

Vorzugsweise sind die Übergänge zwischen den Abschnitten abgerundet.

Die Führung umfasst also keine Kanten, bevorzugt an der oberen Führungswand, die das Führungselement in der Bewegung hindern könnten. Die Führung umfasst zudem keine Verengungen, so dass das Führungselement einfach und rasch führbar ist. Das Führungselement kann zylinderförmig sein. Insbesondere kann das Führungselement so angeordnet sein, dass der Teil des Führungselements, der in der Führung angeordnet ist, nicht über das Hülsenelement hinausragt. So kann ein Hängenbleiben leicht verhindert werden.

Vorzugsweise umfasst die Führung ein Einrastelement. Das Einrastelement ist insbesondere an einem Ende der Führung, insbesondere bevorzugt an einem in einer Verbindungsposition des Hülsenelements unteren Ende der Führung, angeordnet.

Damit kann der Stift einfach in einer ersten Position gehalten werden. Das Führungselement kann ein Federelement umfassen, welches eine Einrastposition erlaubt.

Vorzugsweise umfasst das Einrastelement eine Ausbuchtung der Führung. Die Ausbuchtung weist insbesondere einen Radius auf, der im Wesentlichen die Hälfte des Durchmessers der Führung umfasst, bevorzugt einen Radius von 0.86mm.

Die passgenaue Fertigung ermöglicht eine sichere Befestigung des Führungselements.

Vorzugsweise umfasst der Stift eine Aussparung zur Aufnahme des Führungselements. Die Aussparung umfasst insbesondere einen Querschnittsdurchmesser von 1.5mm, bevorzugt mit einer Toleranz von -0.014 bis -0.034 mm.

Das stellt eine stabile Befestigung des Führungselements sicher.

Vorzugsweise umfasst der Stift eine Höhe von 7.5mm und insbesondere einen Querschnittsdurchmesser von 4mm, bevorzugt mit einer Toleranz von -0.01 bis -0.05mm, wobei der Innenquerschnittsdurchmesser des Hülsenelements 4 mm mit einer Toleranz zwischen 0.1 mm und 0mm beträgt.

Das ermöglicht eine gute Zentrierung des Adapterelements gegenüber der Garnführung durch die Garnführungselemente und der Stift kann rasch und problemlos aus dem Hülsenelement und in das Hülsenelement gleiten.

Vorzugsweise umfasst der Stift einen Kopf zum Klemmen des zweiten Elementes. Der Kopf umfasst insbesondere eine Höhe von im Wesentlichen 1.8 mm.

Der Stift darf nicht zu weit aus dem Anschlusselement oder Adapterelement herausragen, da sonst der Garnweg in das Düsenelement versperrt wird.

Vorzugsweise umfasst der Kopf am Umfang eine abgeflachte Seite und eine gerundete Seite. Die abgeflachte Seite ist insbesondere in einen Abstand von maximal 1.95mm zur Drehachse des Stifts angeordnet. Insbesondere umfasst die gerundete Seite einen Radius von 3.75 mm.

So kann einerseits sichergestellt werden, dass auf dem beengten Raum der Stift nicht den Zugang zu anderen Elementen versperrt. Andererseits kann durch Drehen des Stifts ein entsprechendes Gegenstück leicht verspannt werden.

Vorzugsweise ist an den Übergängen der gerundeten Seite zur abgeflachten Seite mindestens einen Rundungsabschnitt mit einem vom Radius der gerundeten Seite abweichenden Radius, insbesondere einem Radius von 2mm, angeordnet.

Das erlaubt eine passgenaue Drehung.

Vorzugsweise sind an jedem Übergang zwei Rundungsabschnitte angeordnet. Zwischen den Rundungsabschnitten ist jeweils ein gerader Abschnitt, insbesondere in einem Winkel von 45° zur geraden Seite des Kopfes, angeordnet.

Vorzugsweise umfasst das Schraubsystem ein Federelement. Das Federelement ist im Hülsenelement so angeordnet, dass durch Verschieben des Stiftes in das Hülsenelement hinein das Federelement spannbar ist.

Das erlaubt ein schnelles Einrasten, da durch den Federdruck das Führungselement mit dem Einrastelement direkt in Verbindung bringbar ist. Das Schraubsystem kann auch andere Rückstellmechanismen umfassen.

Die Aufgabe wird auch gelöst durch ein Schnellbefestigungssystem zur Befestigung eines Düsenelements einer Textilmaschine. Die Schnellbefestigungsvorrichtung kann mindestens ein Schraubsystem wie vorgehend beschrieben und ein starres Element umfassen. Das starre Element kann ein Klemmelement, insbesondere ein Klemmbolzen, umfassen.

Das Klemmelement kann am Umfang eine abgeflachte und eine abgerundete Seite umfassen. Zwischen abgeflachter und gerundeter Seite kann eine Aussparung zur Anordnung eines Befestigungselements wie einer Schraube angeordnet sein.

Das Klemmelement kann einen Befestigungsabschnitt und ein Klemmabschnitt umfassen. Der Befestigungsabschnitt kann insbesondere einen maximalen Querschnittsdurchmesser von 5.8 mm umfassen. Der Klemmabschnitt kann ein Klemmelement zum Klemmen eines zu befestigenden Elements, insbesondere einen Vorsprung, umfassen. Der Klemmabschnitt kann einen Einschnitt zur Anordnung eines zu befestigenden Elements umfassen. Das Klemmelement kann eine Höhe von 12.7 mm umfassen.

Vorzugsweise umfasst das Düsensystem wie vorhergehend beschrieben ein Schnellbefestigungssystem, welches mindestens ein Schraubsystem wie vorhergehend beschrieben und insbesondere ein Klemmelement umfasst.

Vorzugsweise ist das Schraubsystem so ausgelegt, dass durch ein Drehen eines Elements des Schraubsystems von weniger als 181° von der ersten Befestigungsposition in die zweite Befestigungsposition wechselbar ist.

Erfindungsgemäss wird die Aufgabe weiter durch eine Textilmaschine mit mindestens einem Düsensystem wie vorhergehend beschrieben gelöst.

Das Düsensystem ist bevorzugt so an der Textilmaschine angeordnet und/oder anordenbar, dass das Düsenelement in der ersten Position in wenigstens zwei Bewegungsrichtungen eingeschränkt ist. Bevorzugt ist das Düsenelement so angeordnet, dass die Verbindung zwischen Düsenelement und Anschlussplatte nicht durch Druckluft oder Erdanziehungskraft vom Anschlusselement lösbar ist, das Düsenelement jedoch durch alleiniges Bewegen des Düsenelements, bevorzugt entgegen der Lotrichtung und insbesondere kippen, durch einen Benutzer vom Anschlusselement entfernbar ist. Das Düsensystem kann so angeordnet sein, dass ein Klemmelement in Lotrichtung unten und ein bewegliches Element oder eine bewegliche Vorrichtung oben angeordnet ist.

Die Aufgabe wird weiter durch ein Düsenelement, insbesondere ein Düsenelement für ein Düsensystem wie vorhergehend beschrieben, gelöst. Das Düsenelement umfasst ein Adapterelement zum Verbinden mit einem Anschlusselement und eine Düse. Die Düse umfasst zwei Formelemente, die den Düsenkanal formen und einen Deckel. Die Düse ist an einer Oberseite des Adapterelements angeordnet. Die Düse ist über zwei Schrauben mit dem Adapterelement verbunden, wobei die Schrauben von einer Unterseite des Adapterelements eingeführt sind. Die Verbindung über die beiden Schrauben ist so ausgestaltet, dass die Formelemente durch die Schrauben aufeinander ausgerichtet und auf dem Adapterelement zentriert sind.

So ist ein Düsenelement einfach und präzise herzustellen, da zusätzliche Zentrierstifte weggelassen werden können. Die Formelemente können aus Keramik sein.

Die Aufgabe wird auch gelöst durch Verfahren zur Wartung eines Düsensystems, insbesondere eines Düsensystems wie vorhergehend beschrieben, umfassend die Schritte:
- Bereitstellen eines Düsensystems
- Bringen eines Schnellbefestigungssystems von einer zweiten Position in eine erste Position durch Drehen eines Stifts um maximal 180°
- Verschieben eines Düsenelements aus einer ersten Lage in eine zweite Lage durch Verschieben in der Senkrechten
- Kippen des Düsenelements
- Entfernen des Düsenelements und/oder eines Adapters des Düsenelements von einem Anschlusselement

Eine Ausführungsform eines bevorzugten Düsenelements wird anhand der nachfolgenden Figuren beispielhaft erläutert.

Es zeigen:
Figur 1: Perspektivische Ansicht eines Düsensystems
Figur 2: Draufsicht auf das Düsensystem aus Figur 1
Figur 3: Querschnitt durch ein Schraubsystem
Figur 4: Perspektivische Ansicht einer ersten Ausführungsform eines Hülsenelements
Figur 5: Draufsicht auf einen Stift
Figur 6: Perspektivische Ansicht eines Klemmelements
Figur 7: Draufsicht auf das Klemmelement
Figur 8: Unteransicht eines Adapterelements
Figur 9: Querschnitt durch eine Dichtung
Figur 10: Querschnitt durch ein Anschlusselement
Figur 11: Erste Seitenansicht einer zweiten Ausführungsform eines Hülsenelements
Figur 12: Zweite Seitenansicht einer zweiten Ausführungsform eines Hülsenelements
Figur 13: Dritte Seitenansicht einer zweiten Ausführungsform eines Hülsenelements

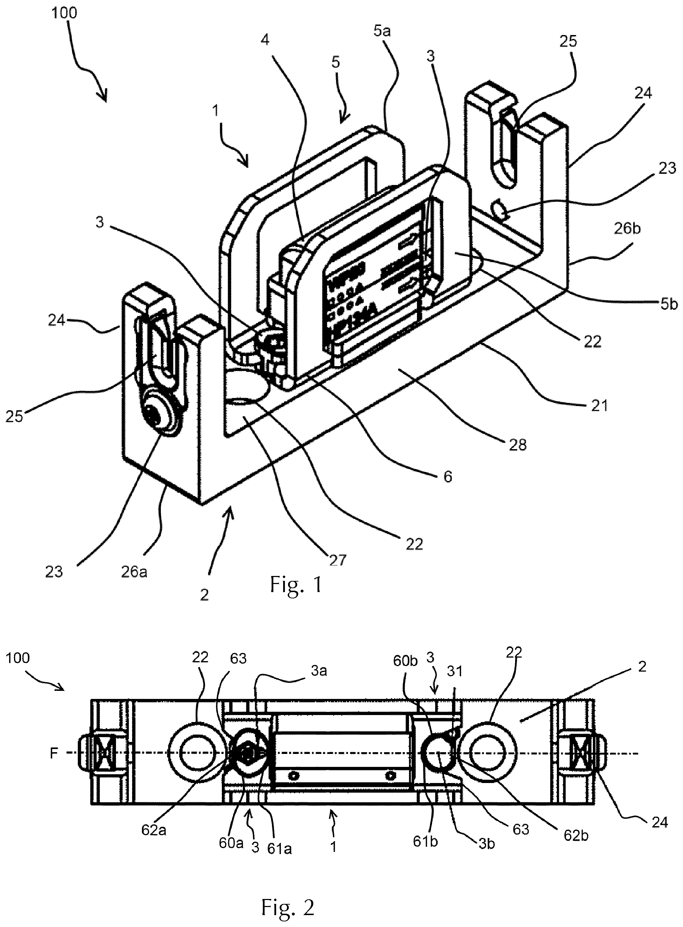

Figur 1 zeigt eine perspektivische Ansicht eines Düsensystems 100. Das Düsensystem 100 umfasst ein Düsenelement 1, welches mit einem Schnellbefestigungssystem 3 an einem Anschlusselement 2 befestigt ist.

Das Düsenelement 1 umfasst eine Düse 4, ein Schutzelement 5 mit zwei Seitenarmen 5a und 5b, die einen Prallkäfig bilden, und ein Adapterelement 6. Das Schutzelement 5 und das Adapterelement 6 sind einstückig gefertigt, in dieser Ausführungsform als ein Teil gestanzt.

Das Anschlusselement 2 umfasst ein Grundelement, hier eine Grundplatte 21, in die zwei Löcher 22 gebohrt sind. Diese dienen dem Verbinden mit einer Textilmaschine. An jedem der Enden 26a, 26b der Grundplatte 21 ist jeweils ein Garnführungselement 24 senkrecht zur Grundplatte 21 angeordnet. Die Garnführungselemente 24 umfassen Garnschutzelemente 25, die mit jeweils einer Schraube 23, hier Linsenschraube, befestigt sind. Die Garnführungselemente 24 sind einstückig mit der Grundplatte 21 gefertigt.

Das Düsenelement 1 ist zwischen den Garnschutzelementen 24 und den Löchern 22 an der breiten, hier oben angeordneten, Fläche 27 der Grundplatte 21 angeordnet. Dabei ist der Garnkanal der Düse 4 seitlich angeordnet (hier nicht gezeigt).

Garne werden vom Ende 26a durch ein erstes Garnführungselement 24, über das Schnellbefestigungssystem 3 und in die Düse 4 geführt, wo sie behandelt werden. Danach werden sie wieder durch das Garnführungselement 24 aus dem Düsensystem 100 geführt.

In der Befestigungsposition des Düsensystems 100 ist das im Bild rechts angeordnete Ende 26b unten angeordnet, die Oberseite 27 und Seitenfläche 28 der Grundplatte 21 sind parallel zur Lotrechten angeordnet.

Details zum Befestigen und Lösen des Düsenelements 1 vom Anschlusselement 2 werden zu Figur 2 beschrieben.

Figur 2 zeigt das Düsensystem 100 aus Figur 1 in Draufsicht. Zu sehen ist das Düsenelement 1, welches mit dem Schnellbefestigungssystem 3 am Anschlusselement 2 befestigt ist. Die Löcher 22 sind hier als Senklochbohrungen ausgeführt. Die Löcher 22 sind direkt anschliessend an schmale Seiten 63 des Düsenelements 1 angeordnet. Das Schnellbefestigungssystem 3 umfasst ein Schraubsystem 3a und ein Klemmelement 3b. Das Klemmelement 3b ist fest mit dem Anschlusselement 2 verbunden, indem das Klemmelement 3b mit einem Befestigungselement 31 in einer Öffnung des Anschlusselements 2 eingespannt ist. Das Schraubsystem 3a ist auf die gleiche Weise befestigt (hier nicht gezeigt). Sowohl das Schraubsystem 3a als auch das Klemmelement 3b umfassen einen Kopf 60a und 60b, wobei jeder Kopf 60a und 60b eine runde Klemmseite 61a, 61b und eine abgeflachte Seite 62a und 62b umfasst. Die abgeflachten Seiten 62a und 62b sind soweit abgeflacht, dass Schrauben problemlos in die Löcher 22 eingebracht werden können. Die abgerundeten Klemmseiten 61a und 61b sind so ausgebildet, dass das Düsenelement 1 einfach geklemmt werden kann (vgl. Figu-ren 5 und 7).

Die Figur stellt das Schnellbefestigungssystem 3 in einer zweiten Position dar. In dieser zweiten Position ist die abgerundete Seite 61a des Kopfes 60a des Schraubsystems 3a so ausgerichtet, dass sie das Düsenelement 1 in Richtung des Klemmelements 3b drückt. Dadurch ist das Düsenelement 1 fest mit dem Anschlusselement 2 verbunden und kann nicht bewegt werden. Wird das Schnellbefestigungssystem 3 gelöst, wird der Kopf 60a des Schraubssystems 3a in die erste Position gebracht, also soweit gedreht, dass die runde Klemmseite 61a des Schraubsystems 3a vom Klemmelement 3b weg zeigt. Dadurch wird die Klemmverbindung zwischen Kopf 60a und Düsenelement 1 gelöst und das Düsenelement 1 kann entlang der Fadenführlinie F verschoben werden. Dies ist die erste Position des Schnellbefestigungssystems 3. In dieser Position ist das Düsenelement 1 soweit gehalten, dass es nicht herunterfallen kann, auch wenn noch Druck auf der Düse ist.

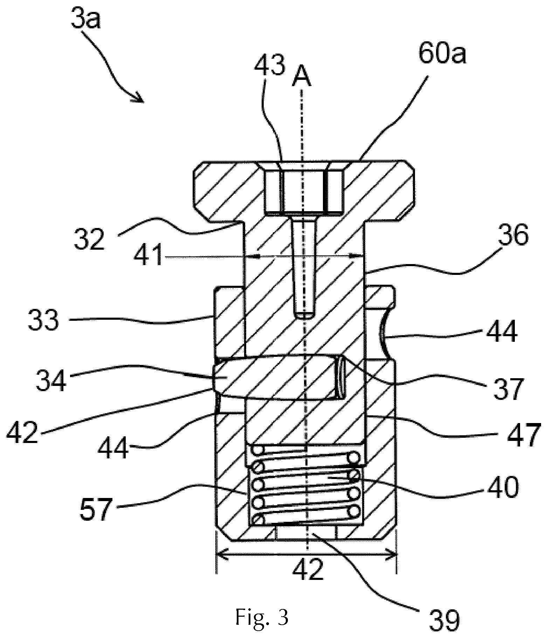

Figur 3 zeigt einen Querschnitt eines Schraubsystems 3a. Das Schraubsystem 3a umfasst ein starres Element, hier ein Hülsenelement 33, ein bewegliches Element, hier einen Stift 32 und ein Führungselement 34.

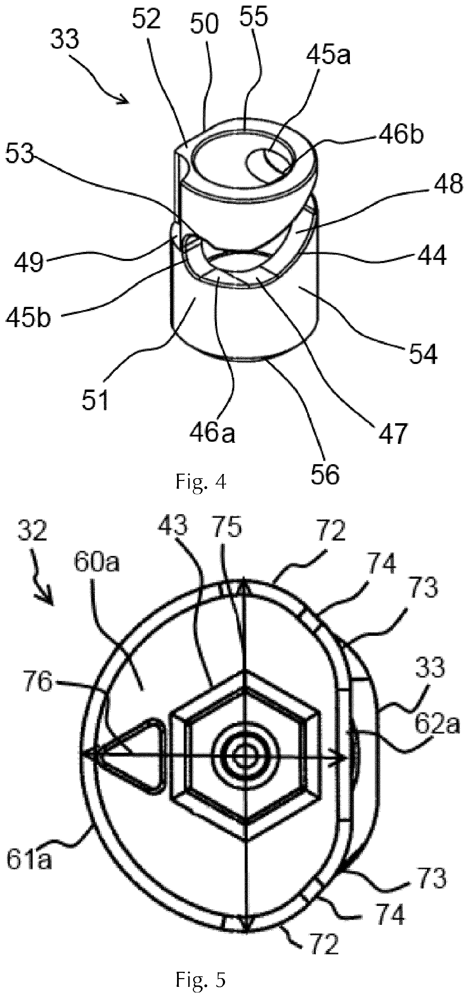

Das Hülsenelement 33 weist einen äusseren Querschnittsdurchmesser von 6mm mit einer Toleranz von 0 bis- 0.1 mm auf und eine Wanddicke von 4mm mit einer Toleranz von +/- 0.05mm an einer abgeflachten Seite 50 (vgl. Figur 4). Im Inneren weist das Hülsenelement 33 einen ersten Innenraum 47 und einen zweiten Innenraum 57 auf. Der erste Innenraum 47 ist oben angeordnet und führt von einer Oberseite 52 des Hülsenelements 33 6mm in Richtung einer Unterseite 56 des Hülsenelements (vgl. Figur 4). Der Querschnittsdurchmesser vom ersten Innenraum 47 beträgt 4 mm mit einer Toleranz zwischen + 0.05 mm und 0mm. Der zweite Innenraum 57 ist unterhalb des ersten Innenraums 47 angeordnet und führt vom ersten Innenraum 47 2mm in Richtung der Unterseite 56 (vgl. Figur 4). Der zweite Innenraum umfasst einen Querschnittsdurchmesser von 3.8mm.

Das Führungselement 34 ist so angeordnet, dass es in einer Führung 44 des Hülsenelements 33 geführt ist. Das Führungselement 34 ist zudem in einer Aussparung 37 im Schaft 36 des Stifts 32 angeordnet. Der Schaft 36 ist teilweise im Innern des Hülsenelements 33 angeordnet. Unterhalb des Schafts 36 und oberhalb einer Öffnung 39 im Boden des Hülsenelements 33 ist ein Federelement 40 angeordnet.

Der Schaft 36 umfasst einen Querschnittsdurchmesser 41 von 4mm mit einer Toleranz von -0.1 mm bis -0.5mm. Die Aussparung 37 im Schaft 36 umfasst einen Querschnittsdurchmesser von 1.5mm mit einer Toleranz von 0.014 bis -0.034 und eine Tiefe von 3.3 mm.

Der Stift 32 umfasst zudem den Kopf 60a des Schraubsystems 3a mit einer Aussparung 43 für einen Sechskantschraubenzieher.

Das Führungselement 34 weist eine zylindrische Form auf. Das Führungselement 34 ist in die Aussparung 37 hineingepresst, so dass der Teil 42 des Führungselements 34, der nicht in der Aussparung 37 angeordnet ist, nicht vorsteht.

Die Figur zeigt das Schraubsystem 3a in einer eingedrehten Befestigungsposition. Der Abstand zwischen dem Hülsenelement 33 und dem Kopf 60a des Stifts 32 ist ein Befestigungsabstand, in dem der zu befestigende Gegenstand, in Figur 1 das Adapterelement 6, angeordnet wird. Dass Federelement 40 ist angespannt.

Zum Lösen des Stifts 32 wird der Stift 32 nach unten in Richtung des Federelements 40 gedrückt und 180° um die Stiftachse A gedreht, bis das Führungselement 34 am oberen Ende 45a der Führung 44 angeordnet ist.

Figur 4 zeigt eine perspektivische Ansicht einer ersten Ausführungsform eines Hülsenelements 33. Das Hülsenelement 33 umfasst im Wesentlichen eine Hülle 51 mit rundem Querschnitt mit einer Oberseite 52 mit einer grossen Öffnung 55 und eine Unterseite 56 mit einer kleinen Öffnung (vgl. Figur 3). Die Hülle 51 umfasst eine abgeflachte Seite 50 und einen Einschnitt 49. Die abgeflachte Seite 50 dient dem Verhindern der Drehung des Hülsenelements 33. Das Hülsenelement 33 wird in einer Aussparung beispielsweise eines Anschlusselements 2 (vgl. Figur 1) angeordnet. Im Einschnitt 49 wird dann ein Befestigungsstift 31 angeordnet, um das Hülsenelement 33 zu fixieren (nicht gezeigt). Der Einschnitt 49 ist an einem Übergang von der abgeflachten Seite 50 zur runden Seite 54 angeordnet und führt von der Oberseite 52 um 7.7 mm nach Unten.

Das Hülsenelement 33 umfasst weiter die Führung 44. Die Führung 44 umfasst einen Durchgang von der Aussenseite der Hülle 51 auf die Innenseite der Hülle 51. Die Führung 44 umfasst zwei Enden 45a und 45b, wobei das erste, obere Ende 45a 0.75 mm mit einer Toleranz von +/- 0.05mm von der Oberseite 52 des Hülsenelements 33 angeordnet ist und das zweite, untere Ende 45b 2.6 mm mit einer Toleranz von +/- 0.5 mm. Am unteren Ende 45b ist ein Einrastelement 53, hier eine Aussparung, angeordnet. Weiter umfasst die Führung 44 an den Enden 45a und 45b zwei Abschnitte 46a und 46b ohne Steigung. Zwischen diesen Abschnitten 46a und 46b ist ein Abschnitt mit Steigung 48 angeordnet.

Das Hülsenelement 33 ist aus Chromnickelstahl.

Figur 5 zeigt das Schraubsystem 3a von Oben. Zu sehen ist der Stift 32 mit Kopf 60a, in dem die Aussparung 43 zum Einbringen eines Sechskantschraubenziehers angeordnet ist. Der Kopf 60a umfasst im Querschnitt eine runde Seite 61a und eine flache Seite 62a. Die runde Seite 61a umfasst einen Radius von 3.75 mm mit einer Toleranz von +/- 0.05mm. An den Übergängen von der runden Seite 61a zur flachen Seite 62a sind jeweils drei Übergangsabschnitte 72, 73, 74 angeordnet. Von der runden Seite 61a zur flachen Seite 62a folgt der erste Übergangsabschnitt 72, welcher eine Rundung mit einem Radius von 2mm umfasst. Der in derselben Richtung folgende, zweite Übergangsabschnitt 74 ist gerade mit einer Neigung von 45° zur geraden Seite 62a. Der dritte, darauffolgende Übergangsabschnitt 73 umfasst wieder eine Rundung von 2mm.

An seiner breitesten Stelle 75 umfasst der Kopf 60a einen Querschnittsdurchmesser von 7.45mm. Quer zu diesem breitesten Querschnittsdurchmesser umfasst der Kopf 60a einen Querschnittsdurchmesser von 5.7mm

Weiter zu sehen ist die Oberseite des Hülsenelements 33.

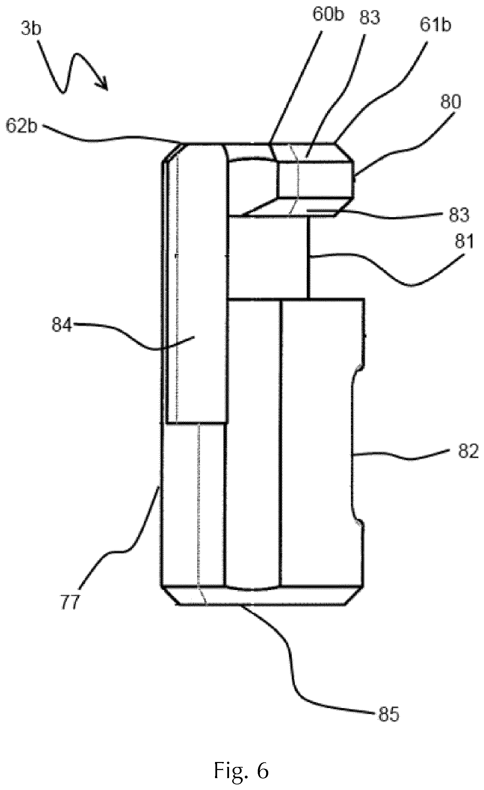

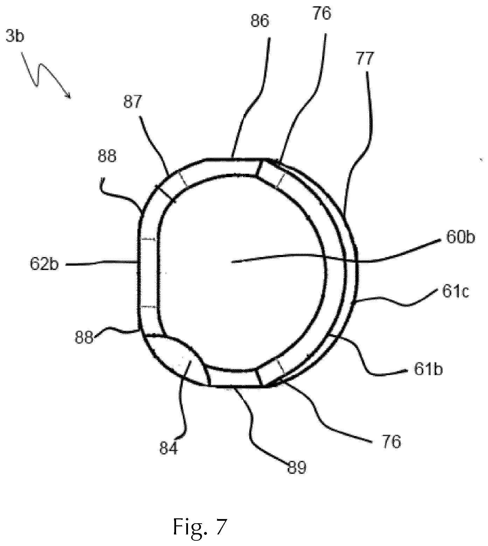

Figur 6 zeigt ein Klemmelement 3b in einer Seitenansicht. Der Klemmelement 3b ist im Wesentlichen 12.7 mm hoch. Der Klemmelement 3b umfasst einen Klemmkopf 60b mit einem Vorsprung 80 auf der runden Seite 61b (vgl. auch Figur 7). Der Vorsprung 80 hat eine Höhe von 2mm. Unterhalb des Vorsprungs 80 ist eine Klemmaussparung 81 angeordnet, in dem die Grundplatte 21 angeordnet werden kann (vgl. Figur 1). Die Klemmaussparung 81 ist 2.3mm hoch. Der Vorsprung 80 umfasst abgeschrägte Kanten 83 zur Oberseite des Klemmelements 3b und zum Ausschnitt 81 hin. Unterhalb der Klemmaussparung 81 ist ein Klemmkörper 77 des Klemmelements 3b angeordnet.

An den Seiten des Klemmkörpers 77 sind zwei weitere Ausschnitte 82 und 84 angeordnet. Der Ausschnitt 84 ist dazu ausgelegt, mit dem Befestigungselement 31 verbunden zu werden (vgl. Figur 1) und führt von einer 5mm von einer Unterseite 85 des Klemmkörpers 77 entfernten Stelle bis zu einer Oberseite 70 des Klemmkopfes 60b. Der Ausschnitt 84 ist 7.7mm lang. Der Ausschnitt 82 ist 4mm lang und beginnt an einer 2.4 mm von der Unterseite 85 des Klemmkörpers 77 entfernten Stelle.

Figur 7 zeigt den Klemmelements 3b in einer Ansicht von Oben. Der Klemmkopf 60b hat im Querschnitt eine runde Seite 61b und eine gerade Seite 62b. Die runde Seite 61b hat einen Radius von 2.7mm. An einem der Übergängen von der runden Seite 61b zur geraden Seite 62b sind drei Übergangsabschnitte 76, 89 und 88 sowie der Ausschnitt 84 angeordnet. Von der runden Seite 61b folgt im Uhrzeigersinn als erstes der gerade Übergangsabschnitt 76, dann folgen der gerade Übergangsabschnitt 89, der Ausschnitt 84 und schliesslich der abgerundete Übergangsabschnitt 88.

Von der runden Seite 61b folgt im Gegenuhrzeigersinn als erstes der gerade Übergangsabschnitt 76, dann folgen der geknickte Übergangsabschnitt 86, der abgerundete Übergangsabschnitt 87 und schliesslich der abgerundete Übergangsabschnitt 88.

Der Querschnittsdurchmesser vom Übergangsabschnitt 86 zum Übergangsabschnitt 89 ist 5.8mm lang. Der Querschnittsdurchmesser von der geraden Seite 62b zur weitesten entfernten Stelle der runden Seite 61b beträgt 5.5mm.

Der Klemmkörper 77 umfasst im Wesentlichen den gleichen Querschnitt. Die runde Seite 61c des Klemmkörperquerschnitts umfasst jedoch einen Radius von 3mm mit einer Toleranz von +/- 0.05mm. Die runde Seite 61c geht direkt in die Übergangsabschnitte 86 und 89 über.

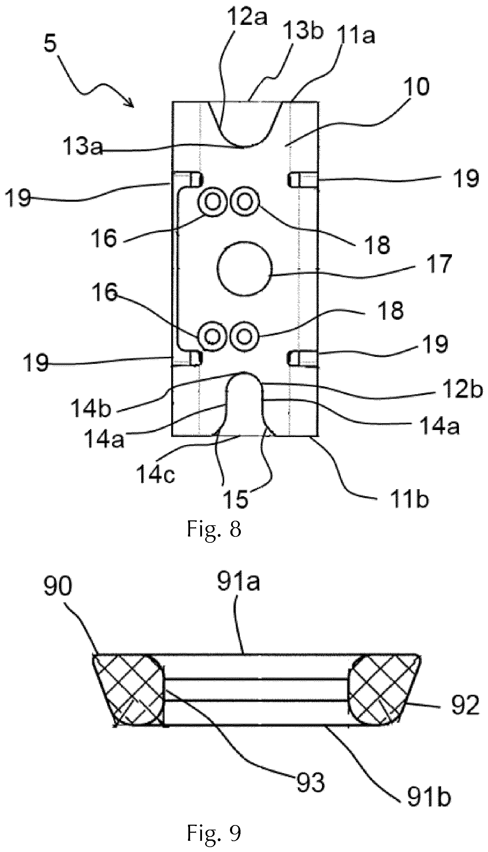

Figur 8 zeigt eine Unteransicht des Adapterelements 6. Zu sehen ist die Unterseite 10 des Adapterelements 6 mit einer rechteckigen Grundfläche. Am schmalen Ende 11a der Grundfläche ist eine Befestigungsöffnung 12a angeordnet. Die Befestigungsöffnung 12a umfasst eine im Wesentlichen eine dreieckige Form, wobei die innere Spitze 13a abgerundet ist mit einem Radius von 3.05mm. Die der Spitze 13 gegenüberliegende Seite 13b ist geöffnet, so dass die Befestigungsöffnung 12a mit dem Klemmelements 3b in Verbindung treten kann (vgl. Figur 1).

Am weiteren schmalen Ende 11b der Grundfläche ist eine Befestigungsöffnung 12b angeordnet. Die Befestigungsöffnung 12b umfasst im Wesentlichen ein Langloch, also zwei parallele Seiten 14a mit hier einer Endabrundung 14b. Die der Endabrundung 14b gegenüberliegende Seite 14c ist geöffnet, so dass die Befestigungsöffnung 12b mit dem Schraubsystem 3a in Verbindung treten kann (vgl. Figur 1). Die Kanten 15 der geöffneten Seite 14c sind abgerundet mit einer Rundung mit einem Radius von 3mm.

In der Mitte der Unterseite 10 ist ein Luftkanal 17 angeordnet, der mit einer Luftzufuhr für die Düse 4 verbindbar ist (vgl. Figur 1). Der Luftkanal 17 umfasst einen Querschnittsdurchmesser von 6mm.

Weiter umfasst das Adapterelement 6 zwei Verbindungsöffnungen 16 zum Verbinden mit der Düse 4 (vgl. Figur 1). Diese Verbindungsöffnungen 16 sind als Senklochbohrung gestaltet mit einem äusseren Querschnittsdurchmesser von 3.2mm und einem inneren Querschnittsdurchmesser von 1.6 mm mit der Toleranz H8.

Weiter umfasst das Adapterelement 6 auf der Unterseite 10 die Senklochbohrungen 18. Diese Senklochbohrungen 18 dienen der Befestigung eines anders gearteten Düsenelements (hier nicht gezeigt).

In dieser Ausführungsform ist das Adapterelement 6 einstückig mit dem Schutzelement 5 gefertigt als ein Stanzteil. Daher sind hier auf der Unterseite 10 die Stanzöffnungen 19 zu sehen.

Figur 9 zeigt einen Querschnitt einer Dichtung 90. Die Dichtung 90 ist im Wesentlichen konisch mit abgeschrägten äusseren Seitenwänden 92 und geraden inneren Seitenwänden 93. Der innere Querschnittsdurchmesser beträgt 6mm. Auf der breiten Seite 91a beträgt der äussere Querschnittsdurchmesser 10.8 mm mit einer Toleranz von +/- 0.15mm. Auf der schmalen Seite 91b ist der äussere Querschnittsdurchmesser 9.126mm mit einer Toleranz von +/- 0.15mm. Die Dichtung 90 ist 2.3 mm hoch mit einer Toleranz von +/- 0.1mm. Die Dichtung 90 ist aus Fluorkarbonkautschuk hergestellt.

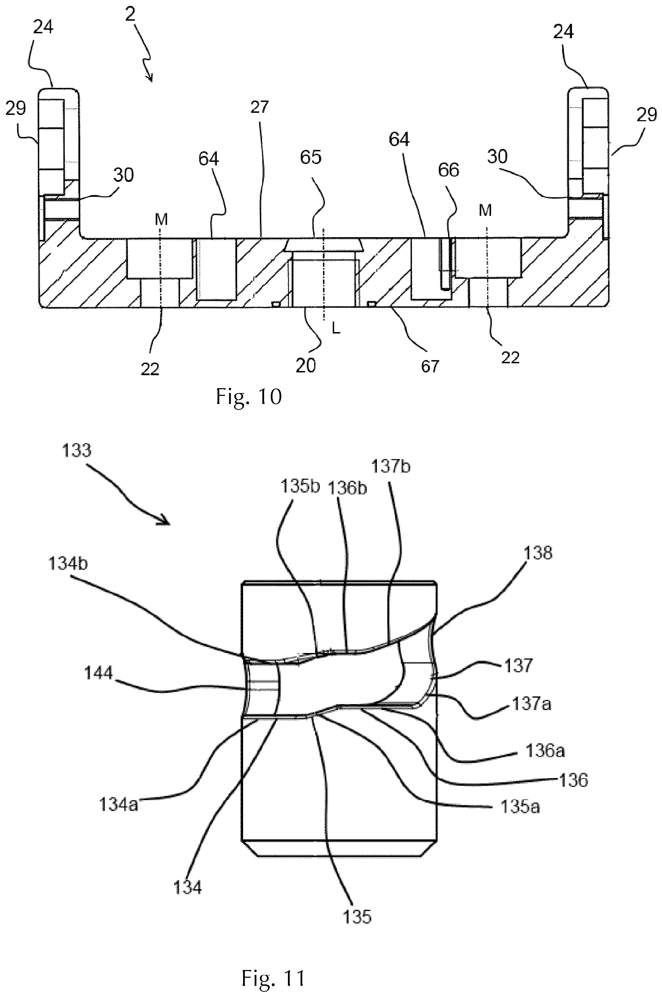

Figur 10 zeigt einen Querschnitt durch das Anschlusselement 2. Zu sehen sind die seitlich angeordneten Garnführungselemente 24, die jeweils eine Aussparung 29 zur Aufnahme eines Garnschutzelements 25 umfasst (vgl. Figur 1).

Unterhalb der Aussparungen 29 sind die Öffnungen 30 angeordnet, in die Schrauben eingebracht werden können zum Befestigen der Garnschutzelemente 25 (vgl. Figur 1).

Eine Mittelachse L eines Luftkanals 20 ist in der Mitte des Anschlusselements 2 angeordnet. Der Luftkanal 29 umfasst ein Gewinde zum Verbinden mit einem Druckluftanschluss. Das Gewinde des Luftkanals 20 führt von einer Unterseite 67 des Anschlusselements 2 6.5 mm in Richtung einer Oberseite 27 des Anschlusselements 2. Anschliessend an den Luftkanal 20 ist eine konisch geformte Erweiterung 65 angeordnet, in der die Dichtung 90 angeordnet werden kann, mit der breiten Seite 91a anliegend an das Ende des Luftkanals 20 (vgl. Figur 9).

Die Löcher 22 sind Senklochbohrungen, die jeweils einen grossen Querschnittsdurchmesser von 9 mm mit einer Toleranz von +/-0.1mm und einen kleinen Querschnittsdurchmesser von 5.3mm aufweisen. Die Mittelachse M der Löcher 22 sind 45mm voneinander entfernt.

Zwischen den Löchern 22 und dem Luftkanal 20 ist jeweils eine Schnellbefestigungsöffnung 64 angeordnet. Die Schnellbefestigungsöffnungen 64 führen von der Oberseite 27 des Anschlusselements 2 8,5 mm in Richtung der Unterseite 67 des Anschlusselements 2. In den Schnellbefestigungsöffnungen 64 wird das Schnellbefestigungssystem 3 angeordnet (vgl. Figur 1). Die Schnellbefestigungsöffnungen 64 haben im Wesentlichen denselben Querschnitt wie der Klemmkörper 77 und das Hülsenelement 33.

Zudem ist angrenzend an jede Schnellbefestigungsöffnung 64 eine Befestigungsöffnung 66 angeordnet (hier nur eine gezeigt). Die Befestigungsöffnung 66 führt 7 mm von der Oberseite 27 des Anschlusselements 2 in Richtung der Unterseite 67 und umfasst ein Gewinde, wobei ein Teil des Umfangs der Befestigungsöffnung 66 zur Schnellbefestigungsöffnung 64 geöffnet ist. In jeder Befestigungsöffnung 66 wird ein Befestigungselement 31 angeordnet und so das Schraubsystem 3a und das Klemmelement 2b mit dem Anschlusselement 2 verbunden (vgl. Figur 2). In einer weiteren Ausführungform ist diese Befestigungsöffnung nur 1.6mm tief mit einer Toleranz von +/- 0.05mm und am Umfang geschlossen (hier nicht gezeigt). Vorteil dieser Ausführungsform ist, dass keine Grate in der Schnellbefestigungsöffnung 64 entstehen.

Figur 11 zeigt eine zweite Ausführungsform eines Hülsenelements 133 in Seitenansicht. Hier werden nur die Unterschiede zur ersten Ausführungsform des Hülsenelements 33 beschrieben.

Das Hülsenelement 133 umfasst eine Führung 144 mit einem ersten geraden Abschnitt 134, einem zweiten Abschnitt 135 mit Steigung, einem dritten, geraden Abschnitt 136 und einem vierten Abschnitt 137 mit Steigung. Der zweite Abschnitt 135 umfasst eine Steigung von 18°, wobei eine Höhe von 0.315 mm mit einer Toleranz +/-0.05 überwunden wird.

Die untere Seitenwand 134a ist länger als die obere Seitenwand 134b. Ebenso ist die untere Seitenwand 136a länger, als die obere Seitenwand 136b.

Die Übergänge zwischen den Abschnitten 134, 135, 136 und 137 sind abgerundet mit Radien zwischen 0.5 und 2 mm, was eine einfache Führung des Führungselements 34 erlaubt (vgl. Figur 3).

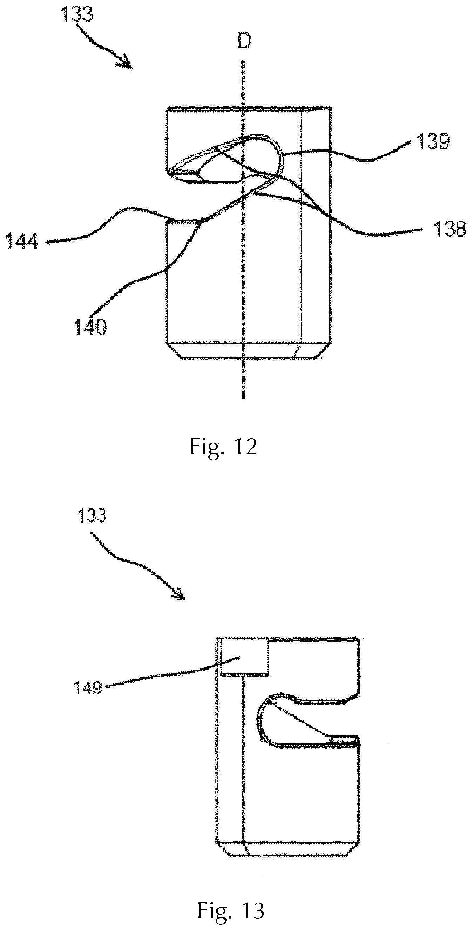

Figur 12 zeigt eine weitere Seitenansicht der zweiten Ausführungsform des Hülsenelements 133.

Der Abschnitt 138 der Führung 144 umfasst keinen geraden Abschnitt, sondern eine Steigung, wobei das Ende 139 abgerundet ist. Der Abschnitt 138 umfasst eine Höhe parallel zur Drehachse D von 2.8 mm. Die untere Seite 140 umfasst einen Übergang 140 mit einem Radius von 0.5mm.

Figur 13 zeigt eine dritte Seitenansicht der zweiten Ausführungsform des Hülsenelements 133. Das Hülsenelement 133 umfasst auch hier einen Einschnitt 149 auf. Der Einschnitt 149 ist in dieser Ausführungsform 1.5 mm hoch und umfasst einen Radius von 1.85 mm mit einer Toleranz von +/- 0.05mm. Der Einschnitt 149 dient der Anordnung des Kopfes einer Schraube, so dass dieser auf die untere Fläche des Einschnitts 149 drückt.

## Patentansprüche

1. Düsensystem (100) für eine Textilmaschine umfassend mindestens ein Düsenelement (1) und ein Anschlusselement (2) zur Verbindung des Düsenelements (1) mit einer Textilmaschine, **dadurch gekennzeichnet, dass** das Anschlusselement (2) mindestens ein Schnellbefestigungssystem (3) umfasst, wobei das Schnellbefestigungssystem (3) eine erste und eine zweite Position umfasst, wobei in der ersten Position das Schnellbefestigungssystem (3) mit dem Anschlusselement (2) verbunden ist, so dass das Düsenelement (1) so am Schnellbefestigungssystem (3) befestigbar ist, dass das Düsenelement (1) ohne Hilfsmittel entfernbar ist, wobei das Schnellbefestigungssystem (3) so ausgelegt ist, dass in der zweiten Position das Düsenelement (1) unbeweglich am Anschlusselement (2) befestigt ist.

2. Düsensystem (100) nach Anspruch 1, **dadurch gekennzeichnet, dass** das Schnellbefestigungssystem (3) so ausgelegt ist, dass in einer Befestigungsposition des Anschlusselements (2) ein Herunterfallen des Düsenelements (1) verhinderbar ist.

3. Düsensystem (100) nach einem der vorhergehenden Ansprüche, **dadurch gekennzeichnet, dass** in der ersten Position des Schnellbefestigungssystems (3) das Düsenelement (1) zwischen einer ersten und einer zweiten Lage beweglich ist.

4. Düsensystem (100) nach einem der vorhergehenden Ansprüche, **dadurch gekennzeichnet, dass** das mindestens eine Düsenelement (1) ein Adapterelement (6) umfasst, wobei mindestens eine Düse (4) am Adapterelement (6) angeordnet ist.

5. Düsensystem (100) nach Anspruch 4, **dadurch gekennzeichnet, dass** durch das Schnellbefestigungssystem (3) die mindestens eine Düse (1) direkt oder über ein Zwischenadapterelement am Adapterelement (6) und/oder das Adapterelement (6) am Anschlusselement (2) befestigt oder befestigbar ist.

6. Düsensystem (100) nach einem der vorhergehenden Ansprüche, **dadurch gekennzeichnet, dass** das Anschlusselement (2) eine Dichtung (90) zur Abdichtung einer Luftzufuhr umfasst.

7. Düsensystem (100) nach Anspruch 6, **dadurch gekennzeichnet, dass** die Dichtung (90) eine im Wesentlichen konische Form umfasst, wobei die Innenfläche insbesondere einen zur Achse der Dichtung (90) hin konstanten Radius umfasst.

8. Düsensystem (100) nach einem der vorhergehenden Ansprüche, **dadurch gekennzeichnet, dass** das Anschlusselement (2) mindestens eine Aussparung (64) zur Aufnahme eines Hülsenelements (33) des Schnellbefestigungssystems (3) umfasst.

9. Düsensystem (100) nach Anspruch 5, **dadurch gekennzeichnet, dass** das Düsenelement (1) mindestens ein Schutzelement (5) zum Schutz der Düse (4) umfasst.

10. Düsensystem (100) nach Anspruch 9, **dadurch gekennzeichnet, dass** das Schutzelement (5) einen Prallkäfig (5a, 5b) umfasst.

11. Schraubsystem (3a) für ein Schnellbefestigungssystem (83) eines Düsensystems (100) nach einem der Ansprüche 1-10, wobei das Schraubsystem (3a) ein Hülsenelement (33) zum Befestigen an einem ersten Element (2) und einen Stift (32) zum Verbinden mit einem zweiten Element (6) umfasst, wobei der Stift (32) mindestens ein am Umfang angeordnetes Führungselement (34) umfasst, wobei das Hülsenelement (33) eine Führung (44) zur Führung des Führungselements (34) umfasst, wobei der Stift (32) zumindest teilweise innerhalb des Hülsenelements (33) angeordnet ist, so dass der Stift (32) relativ zum Hülsenelement (33) dreh- und verschiebbar gelagert ist, **dadurch gekennzeichnet, dass** die Führung (44) maximal ¾ Windung, insbesondere maximal 1/2 einer Windung, umfasst, wobei das Schraubsystem (3a) ein Federelement (40) umfasst, wobei das Federelement (40) im Hülsenelement (33) so angeordnet ist, dass durch Verschieben des Stiftes (32) in das Hülsenelement (33) hinein das Federelement (40) spannbar ist.

12. Schraubsystem (3a) nach Anspruch 11 **dadurch gekennzeichnet, dass** das Hülsenelement (33) ein Verdrehsicherungselement (50) umfasst.

13. Schraubsystem (3a) nach einem der Ansprüche 11 oder 12, **dadurch gekennzeichnet, dass** die Führung (44) so ausgebildet ist, dass ein Hub des Stifts (32) von mindestens 1. 55 mm möglich ist.

14. Schraubsystem (3a) nach einem der Ansprüche 11-13, **dadurch gekennzeichnet, dass** die Führung (44) geschlossen ist.

15. Schraubsystem (3a) nach Anspruch 13, **dadurch gekennzeichnet, dass** die Führung (44) mehrere Abschnitte (46a, 46b, 48) umfasst, wobei die Abschnitte mit oder ohne Steigung ausgebildet sind.

16. Schraubsystem (3a) nach Anspruch 15, **dadurch gekennzeichnet, dass** die Übergänge zwischen den Abschnitten (46a, 46b, 48) abgerundet sind.

17. Schraubsystem (3a) nach einem der Ansprüche 11-16, **dadurch gekennzeichnet, dass** die Führung (44) ein Einrastelement (53) umfasst, wobei das Einrastelement (53) insbesondere an einem Ende (45a, 45b) der Führung (44), insbesondere bevorzugt an in einer Verbindungsposition des Hülsenelements unteren Ende (45b) der Führung (44) angeordnet ist.

18. Schraubsystem (3a) nach Anspruch 17, **dadurch gekennzeichnet, dass** das Einrastelement (53) eine Ausbuchtung der Führung (44) umfasst, wobei die Ausbuchtung insbesondere einen Radius aufweist, der im Wesentlichen die Hälfte des Durchmessers der Führung (44) umfasst, bevorzugt einen Radius von 0.86mm.

19. Schraubsystem (3a) nach einem der Ansprüche 11-18, **dadurch gekennzeichnet, dass** der Stift (32) eine Aussparung (37) zur Aufnahme des Führungselements (34) umfasst, wobei die Aussparung (37) insbesondere einen Querschnittsdurchmesser von 1.5mm, bevorzugt mit einer Toleranz von -0.014 bis - 0.034 mm umfasst.

20. Schraubsystem (3a) nach einem der Ansprüche 11-19, **dadurch gekennzeichnet, dass** der Stift (32) eine Höhe von 7.5mm umfasst und insbesondere einen Querschnittsdurchmesser (41) von 4mm, bevorzugt mit einer Toleranz von -0.01 bis - 0.05mm, wobei der Innenquerschnittsdurchmesser des Hülsenelements (33) 4 mm mit einer Toleranz zwischen 0.1 mm und 0mm beträgt.

21. Schraubsystem (3a) nach einem der Ansprüche 11-21, **dadurch gekennzeichnet, dass** der Stift (32) einen Kopf (60a) zum Klemmen des zweiten Elementes (6) umfasst, wobei der Kopf (60a) insbesondere eine Höhe von im Wesentlichen 1.8 mm umfasst.

22. Schraubsystem (3a) nach Anspruch 21, **dadurch gekennzeichnet, dass** der Kopf (60a) am Umfang eine abgeflachte Seite (62a) und eine gerundete Seite (61a) umfasst, wobei die abgeflachte Seite (62a) insbesondere in einen Abstand von Maximal 1.95mm zur Drehachse (A) des Stifts (32) angeordnet ist, wobei insbesondere die gerundete Seite (62a) einen Radius von 3.75 mm umfasst.

23. Schraubsystem (3a) nach Anspruch 22, **dadurch gekennzeichnet, dass** an den Übergängen der gerundeten Seite (62a) zur abgeflachten Seite (61a) mindestens einen Rundungsabschnitt (72, 73) mit einem vom Radius der gerundeten Seite (62a) abweichenden Radius, insbesondere einem Radius von 2mm, angeordnet ist.

24. Schraubsystem (3a) nach Anspruch 23, **dadurch gekennzeichnet, dass** an jedem Übergang zwei Rundungsabschnitte (72, 73) angeordnet sind, wobei zwischen den Rundungsabschnitten (72, 73) jeweils ein gerader Abschnitt (74), insbesondere in einem Winkel von 45° zur geraden Seite (62a) des Kopfes (60a), angeordnet ist.

25. Düsensystem (100) nach einem der Ansprüche 1-10, **dadurch gekennzeichnet, dass** das Schnellbefestigungssystem (3) mindestens ein Schraubsystem (3a) nach einem der Ansprüche 11-25 und insbesondere ein Klemmelement (3b) umfasst.

26. Düsensystem (100) nach Anspruch 25, **dadurch gekennzeichnet, dass** das Schraubsystem (3a) so ausgelegt ist, dass durch ein Drehen eines Elements (32) des Schraubsystems (3a) von weniger als 181° von der ersten Befestigungsposition in die zweite Befestigungsposition wechselbar ist.

27. Textilmaschine mit mindestens einem Düsensystem (100) nach einem der Ansprüche 1-10 oder 25-26.

## Claims

1. Nozzle system (100) for a textile machine comprising at least one nozzle element (1) and a connection element (2) for connecting the nozzle element (1) to a textile machine, **characterised in that** the connection element (2) comprises at least one quick-fastening system (3), wherein the quick-fastening system (3) comprises a first and a second position, wherein in the first position the quick-fastening system (3) is connected to the connection element (2) such that the nozzle element (1) can be fastened to the quick-fastening system (3) so that the nozzle element (1) is removable without tools, wherein the quick-fastening system (3) is designed such that in the second position the nozzle element (1) is immovably fastened to the connection element (2).

2. Nozzle system (100) according to claim 1, **characterised in that** the quick-fastening system (3) is designed such that in a fastening position of the connection element (2), falling of the nozzle element (1) can be prevented.

3. Nozzle system (100) according to any one of the preceding claims, **characterised in that** in the first position of the quick-fastening system (3), the nozzle element (1) is movable between a first and a second position.

4. Nozzle system (100) according to any one of the preceding claims, **characterised in that** the at least one nozzle element (1) comprises an adapter element (6), wherein at least one nozzle (4) is arranged on the adapter element (6).

5. Nozzle system (100) according to claim 4, **characterised in that** by means of the quick-fastening system (3), the at least one nozzle (1) is fastened or is fastenable directly or via an intermediate adapter element to the adapter element (6) and/or the adapter element (6) is fastened or is fastenable to the connection element (2).

6. Nozzle system (100) according to any one of the preceding claims, **characterised in that** the connection element (2) comprises a seal (90) for sealing an air supply.

7. Nozzle system (100) according to claim 6, **characterised in that** the seal (90) comprises a substantially conical shape, wherein the inner surface in particular comprises a radius that is constant relative to the axis of the seal (90).

8. Nozzle system (100) according to any one of the preceding claims, **characterised in that** the connection element (2) comprises at least one recess (64) for receiving a sleeve element (33) of the quick-fastening system (3).

9. Nozzle system (100) according to claim 5, **characterised in that** the nozzle element (1) comprises at least one protective element (5) for protecting the nozzle (4).

10. Nozzle system (100) according to claim 9, **characterised in that** the protective element (5) comprises an impact cage (5a, 5b).

11. Screw system (3a) for a quick-fastening system (83) of a nozzle system (100) according to any one of claims 1-10, wherein the screw system (3a) comprises a sleeve element (33) for fastening to a first element (2) and a pin (32) for connecting to a second element (6), wherein the pin (32) comprises at least one guide element (34) arranged on the circumference, wherein the sleeve element (33) comprises a guide (44) for guiding the guide element (34), wherein the pin (32) is at least partially arranged within the sleeve element (33), such that the pin (32) is mounted rotatably and displaceably relative to the sleeve element (33), **characterised in that** the guide (44) comprises a maximum of ¾ of a turn, in particular a maximum of 1/2 of a turn, wherein the screw system (3a) comprises a spring element (40), wherein the spring element (40) is arranged in the sleeve element (33) such that by displacing the pin (32) into the sleeve element (33), the spring element (40) can be tensioned.

12. Screw system (3a) according to claim 11, **characterised in that** the sleeve element (33) comprises an anti-rotation element (50).

13. Screw system (3a) according to any one of claims 11 or 12, **characterised in that** the guide (44) is designed such that a stroke of the pin (32) of at least 1.55 mm is possible.

14. Screw system (3a) according to any one of claims 11-13, **characterised in that** the guide (44) is closed.

15. Screw system (3a) according to claim 13, **characterised in that** the guide (44) comprises a plurality of sections (46a, 46b, 48), wherein the sections are designed with or without a pitch.

16. Screw system (3a) according to claim 15, **characterised in that** the transitions between the sections (46a, 46b, 48) are rounded.

17. Screw system (3a) according to any one of claims 11-16, **characterised in that** the guide (44) comprises a latching element (53), wherein the latching element (53) is arranged in particular at one end (45a, 45b) of the guide (44), particularly preferably at the lower end (45b) of the guide (44) in a connection position of the sleeve element.

18. Screw system (3a) according to claim 17, **characterised in that** the latching element (53) comprises a bulge of the guide (44), wherein the bulge in particular has a radius that is substantially half the diameter of the guide (44), preferably a radius of 0.86 mm.

19. Screw system (3a) according to any one of claims 11-18, **characterised in that** the pin (32) comprises a recess (37) for receiving the guide element (34), wherein the recess (37) in particular comprises a cross-sectional diameter of 1.5 mm, preferably with a tolerance of -0.014 to -0.034 mm.

20. Screw system (3a) according to any one of claims 11-19, **characterised in that** the pin (32) comprises a height of 7.5 mm and in particular a cross-sectional diameter (41) of 4 mm, preferably with a tolerance of -0.01 to -0.05 mm, wherein the inner cross-sectional diameter of the sleeve element (33) is 4 mm with a tolerance between 0.1 mm and 0 mm.

21. Screw system (3a) according to any one of claims 11-21, **characterised in that** the pin (32) comprises a head (60a) for clamping the second element (6), wherein the head (60a) in particular comprises a height of substantially 1.8 mm.

22. Screw system (3a) according to claim 21, **characterised in that** the head (60a) comprises on the circumference a flattened side (62a) and a rounded side (62a), wherein the flattened side (62a) is in particular arranged at a distance of a maximum of 1.95 mm from the axis of rotation (A) of the pin (32), wherein in particular the rounded side (61a) comprises a radius of 3.75 mm.

23. Screw system (3a) according to claim 22, **characterised in that** at the transitions from the rounded side (62a) to the flattened side (61a), at least one rounding section (72, 73) is arranged with a radius deviating from the radius of the rounded side (61a), in particular a radius of 2 mm.

24. Screw system (3a) according to claim 23, **characterised in that** at each transition, two rounding sections (72, 73) are arranged, wherein between the rounding sections (72, 73) a straight section (74) is respectively arranged, in particular at an angle of 45° to the straight side (62a) of the head (60a).

25. Nozzle system (100) according to any one of claims 1-10, **characterised in that** the quick-fastening system (3) comprises at least one screw system (3a) according to any one of claims 11-25 and in particular a clamping element (3b).

26. Nozzle system (100) according to claim 25, **characterised in that** the screw system (3a) is designed such that it is switchable from the first fastening position to the second fastening position by a rotation of an element (32) of the screw system (3a) of less than 181°.

27. Textile machine with at least one nozzle system (100) according to any one of claims 1-10 or 25-26.

## Revendications

1. Système de buse (100) pour une machine textile comprenant au moins un élément de buse (1) et un élément de raccordement (2) pour raccorder l'élément de buse (1) à une machine textile, **caractérisé en ce que** l'élément de raccordement (2) comprend au moins un système de fixation rapide (3), dans lequel le système de fixation rapide (3) comprend une première et une seconde position, dans lequel, dans la première position, le système de fixation rapide (3) est raccordé à l'élément de raccordement (2) de telle sorte que l'élément de buse (1) peut être fixé au système de fixation rapide (3) de sorte que l'élément de buse (1) est amovible sans outils, dans lequel le système de fixation rapide (3) est conçu de telle sorte que, dans la seconde position, l'élément de buse (1) est fixé de manière inamovible à l'élément de raccordement (2).

2. Système de buse (100) selon la revendication 1, **caractérisé en ce que** le système de fixation rapide (3) est conçu de telle sorte que, dans une position de fixation de l'élément de raccordement (2), la chute de l'élément de buse (1) peut être empêchée.

3. Système de buse (100) selon l'une quelconque des revendications précédentes, **caractérisé en ce que**, dans la première position du système de fixation rapide (3), l'élément de buse (1) est mobile entre une première et une seconde position.

4. Système de buse (100) selon l'une quelconque des revendications précédentes, **caractérisé en ce que** l'au moins un élément de buse (1) comprend un élément adaptateur (6), dans lequel au moins une buse (4) est agencée sur l'élément adaptateur (6).

5. Système de buse (100) selon la revendication 4, **caractérisé en ce que**, au moyen du système de fixation rapide (3), l'au moins une buse (1) est fixée ou peut être fixée directement ou par l'intermédiaire d'un élément adaptateur intermédiaire à l'élément adaptateur (6) et/ou l'élément adaptateur (6) est fixé ou peut être fixé à l'élément de raccordement (2).

6. Système de buse (100) selon l'une quelconque des revendications précédentes, **caractérisé en ce que** l'élément de raccordement (2) comprend un joint (90) pour assurer l'étanchéité d'une alimentation en air.

7. Système de buse (100) selon la revendication 6, **caractérisé en ce que** le joint (90) comprend une forme sensiblement conique, dans lequel la surface intérieure en particulier comprend un rayon qui est constant par rapport à l'axe du joint (90).

8. Système de buse (100) selon l'une quelconque des revendications précédentes, **caractérisé en ce que** l'élément de raccordement (2) comprend au moins un évidement (64) pour recevoir un élément de manchon (33) du système de fixation rapide (3).

9. Système de buse (100) selon la revendication 5, **caractérisé en ce que** l'élément de buse (1) comprend au moins un élément de protection (5) pour protéger la buse (4).

10. Système de buse (100) selon la revendication 9, **caractérisé en ce que** l'élément de protection (5) comprend une cage de protection contre les chocs (5a, 5b).

11. Système de vis (3a) pour un système de fixation rapide (83) d'un système de buse (100) selon l'une quelconque des revendications 1 à 10, dans lequel le système de vis (3a) comprend un élément de manchon (33) pour la fixation à un premier élément (2) et une goupille (32) pour le raccordement à un second élément (6), dans lequel la goupille (32) comprend au moins un élément de guidage (34) agencé sur la circonférence, dans lequel l'élément de manchon (33) comprend un guidage (44) pour guider l'élément de guidage (34), dans lequel la goupille (32) est au moins partiellement agencée à l'intérieur de l'élément de manchon (33), de telle sorte que la goupille (32) est montée de manière rotative et déplaçable par rapport à l'élément de manchon (33), **caractérisé en ce que** le guidage (44) comprend un maximum de ¾ de tour, en particulier un maximum de 1/2 tour, dans lequel le système de vis (3a) comprend un élément de ressort (40), dans lequel l'élément de ressort (40) est agencé dans l'élément de manchon (33) de telle sorte qu'en déplaçant la goupille (32) dans l'élément de manchon (33), l'élément de ressort (40) peut être mis sous tension.

12. Système de vis (3a) selon la revendication 11, **caractérisé en ce que** l'élément de manchon (33) comprend un élément anti-rotation (50).

13. Système de vis (3a) selon l'une quelconque des revendications 11 ou 12, **caractérisé en ce que** le guidage (44) est conçu de telle sorte qu'une course de la goupille (32) d'au moins 1,55 mm est possible.

14. Système de vis (3a) selon l'une quelconque des revendications 11 à 13, **caractérisé en ce que** le guidage (44) est fermé.

15. Système de vis (3a) selon la revendication 13, **caractérisé en ce que** le guidage (44) comprend une pluralité de sections (46a, 46b, 48), dans lequel les sections sont conçues avec ou sans pas.

16. Système de vis (3a) selon la revendication 15, **caractérisé en ce que** les transitions entre les sections (46a, 46b, 48) sont arrondies.

17. Système de vis (3a) selon l'une quelconque des revendications 11 à 16, **caractérisé en ce que** le guidage (44) comprend un élément d'encliquetage (53), dans lequel l'élément d'encliquetage (53) est agencé en particulier à une extrémité (45a, 45b) du guidage (44), de manière particulièrement préférée à l'extrémité inférieure (45b) du guidage (44) dans une position de raccordement de l'élément de manchon.

18. Système de vis (3a) selon la revendication 17, **caractérisé en ce que** l'élément d'encliquetage (53) comprend un renflement du guidage (44), dans lequel le renflement présente en particulier un rayon qui est sensiblement la moitié du diamètre du guidage (44), de préférence un rayon de 0,86 mm.

19. Système de vis (3a) selon l'une quelconque des revendications 11 à 18, **caractérisé en ce que** la goupille (32) comprend un évidement (37) pour recevoir l'élément de guidage (34), dans lequel l'évidement (37) comprend en particulier un diamètre de section transversale de 1,5 mm, de préférence avec une tolérance de -0,014 à -0,034 mm.

20. Système de vis (3a) selon l'une quelconque des revendications 11 à 19, **caractérisé en ce que** la goupille (32) comprend une hauteur de 7,5 mm et en particulier un diamètre de section transversale (41) de 4 mm, de préférence avec une tolérance de -0,01 à -0,05 mm, dans lequel le diamètre de section transversale intérieur de l'élément de manchon (33) est de 4 mm avec une tolérance comprise entre 0,1 mm et 0 mm.

21. Système de vis (3a) selon l'une quelconque des revendications 11 à 21, **caractérisé en ce que** la goupille (32) comprend une tête (60a) pour serrer le second élément (6), dans lequel la tête (60a) comprend en particulier une hauteur de sensiblement 1,8 mm.

22. Système de vis (3a) selon la revendication 21, **caractérisé en ce que** la tête (60a) comprend sur la circonférence un côté aplati (62a) et un côté arrondi (62a), dans lequel le côté aplati (62a) est en particulier agencé à une distance maximale de 1,95 mm de l'axe de rotation (A) de la goupille (32), dans lequel en particulier le côté arrondi (61a) comprend un rayon de 3,75 mm.

23. Système de vis (3a) selon la revendication 22, **caractérisé en ce que**, aux transitions du côté arrondi (62a) au côté aplati (61a), au moins une section d'arrondi (72, 73) est agencée avec un rayon s'écartant du rayon du côté arrondi (61a), en particulier un rayon de 2 mm.

24. Système de vis (3a) selon la revendication 23, **caractérisé en ce que**, à chaque transition, deux sections d'arrondi (72, 73) sont agencées, dans lequel entre les sections d'arrondi (72, 73) une section droite (74) est respectivement agencée, en particulier à un angle de 45° par rapport au côté droit (62a) de la tête (60a).

25. Système de buse (100) selon l'une quelconque des revendications 1 à 10, **caractérisé en ce que** le système de fixation rapide (3) comprend au moins un système de vis (3a) selon l'une quelconque des revendications 11 à 25 et en particulier un élément de serrage (3b).

26. Système de buse (100) selon la revendication 25, **caractérisé en ce que** le système de vis (3a) est conçu de telle sorte qu'il est commutable de la première position de fixation à la seconde position de fixation par une rotation d'un élément (32) du système de vis (3a) inférieure à 181°.

27. Machine textile avec au moins un système de buse (100) selon l'une quelconque des revendications 1 à 10 ou 25 à 26.
